# EUROPÄISCHE PATENTSCHRIFT

(11) **EP 0 718 996 B1**
(45) Veröffentlichungstag und Bekanntmachung des Hinweises auf die Patenterteilung: **09.04.2003**
(21) Anmeldenummer: 95117577.7
(22) Anmeldetag: 08.11.1995
(51) Int. Cl.: H04J 3/16, H04B 7/15, H04Q 11/04, H04B 7/155

(54) **STM-4 Richtfunksystem**
STM-4 radio relay system
Système de faisceau hertzien STM-4

(30) Priorität: 20.12.1994 DE 4445275; 03.07.1995 DE 19524113
(43) Veröffentlichungstag der Anmeldung: 26.06.1996
(73) Patentinhaber: ROBERT BOSCH GMBH, 70442 Stuttgart (DE)
(72) Erfinder: Mueller, Michael, Dipl.-Ing. (FH), D-71636 Ludwigsburg (DE)
(74) Vertreter: Manitz, Finsterwald & Partner

(56) Entgegenhaltungen:
- BROWNE-MARKE D D ET AL: "THE INTEGRATION OF DIGITAL MICROWAVE RADIO SYSTEMS UNDER THE TELEFOMMUNICATIONS MANAGEMENT NETWORK (TMN)" EUROPEAN CONFERENCE ON RADIO RELAY SYSTEMS, EDINBURGH, OCT. 11 - 14, 1993, Nr. CONF. 4, 11.Oktober 1993, INSTITUTION OF ELECTRICAL ENGINEERS, Seiten 154-161, XP000479329
- JEMCZYK I D ET AL: "S/DMS TRANSPORTNODE SONET RADIO 4/40" COMMUNICATION FOR GLOBAL USERS, ORLANDO, DEC. 6 - 9, 1992, Bd. VOL. 3, Nr. -, 6.Dezember 1992, INSTITUTE OF ELECTRICAL AND ELECTRONICS ENGINEERS, Seiten 1835-1839, XP000390487
- PAOLI G: "SYNCHRONOUS RADIO: A SYSTEM SOLUTION TO INTEGRATE MICROWAVE AND OPTICAL TECHNIQUES" SPEAKERS' PAPERS. 6TH WORL TELECOMMUNICATION FORUM. PART 2. TECHNICAL SYMPOSIUM. INTEGRATION, INTEROPERATION AND INTERCONNECTION: THE WAY TO GLOBAL SERVICES, Bd. 2, Oktober 1991, GENEVA, SWITZERLAND, Seiten 137-141, XP000198381
- BOURDON W: "RICHTFUNKSYSTEME FUER DIE SYNCHRONE DIGITALE HIERARCHIE" NACHRICHTENTECHNISCHE BERICHTE, Nr. 9, 1.April 1992, Seiten 44-54, XP000331851

## Beschreibung

### Stand der Technik

Die vorliegende Erfindung betrifft ein Richtfunksystem zum Übertragen von STM-4 strukturierten Signalen innerhalb eines Regenerator-Abschnitts eines Übertragungsnetzes der synchronen digitalen Hierarchie (SDH), wobei ein STM-4 Signal einen Rahmen darstellt, der neben einem Nutzsignalbereich einen Bereich für Steuerinformationen - Section Overhead - enthält, welcher in einen Regenerator Section Overhead und in einen Multiplex Section Overhead unterteilt ist.

Der Rahmenaufbau eines STM-N Signals für das SDH-Netz sind im wesentlichen in den ITU-T-Empfehlungen G.707, G.708 und G.709 definiert. Für die Datenübertragung sind bestimmte Datenstrukturen vorgebeben, die sogenannten synchronous transport modules (STM), für die es verschiedene Hierarchiestufen gibt. Die niedrigste Hierarchiestufe bilden die STM-1 Signale, welche eine Bitrate von 155,52 Mbit/s haben.Zu einer höheren Hierarchiestufe gehören die STM-4 Signale. Sie weisen eine Bitrate von 622,080 Mbit/s auf. Die STM strukturierten Signale, egal welcher Hierarchiestufe sie sind, stellen alle einen Rahmen in einer Blockstruktur dar, in dem es einen Nutzsignalbereich gibt und den sogenannten Section Overhead (SOH), in dem sich Steuerinformationen befinden und außerdem die Übertragung von Hilfsdiensten der verschiedensten Art möglich ist.

Da ein SDH-Netz bekanntermaßen in Multiplexabschnitte und Regeneratorabschnitte aufgeteilt ist, gliedert sich der Section Overhead in einen Multiplex Section Overhead und in einen Regenerator Section Overhead auf.

In der Veröffentlichung von Browne-Marke, D. D. et al., "The Integration of Digital Microwave Radio Systems under the Telecommunications Management Network (TMN)", European Conference on Radio Relay Systems, Edinburgh, Oct. 11 - 14, 1993, Institution of Electrical Engineers, Seiten 154 - 161, wird vorgeschlagen, STM-4-Verkehr unter Verwendung von vier Richtfunksystemen für STM-1-Verkehr zu übertragen. Eine Richtfunkendstelle weist dabei einen Multiplex Section Abschluss (Multiplex Section Termination) auf.

Der Erfindung liegt nun die Aufgabe zugrunde, ein Richtfunksystem zum Übertragen von STM-4 strukturierten Signalen der eingangs genannten Art anzugeben, das mit möglichst geringem Aufwand realisierbar ist.

### Vorteile der Erfindung

Erfindungsgemäß wird diese Aufgabe durch die Merkmale des Patentanspruchs 1 gelöst, indem nämlich die STM-4 strukturierten Signale über vier für STM-1 strukturierte Signale ausgelegte Richtfunksysteme übertragen werden. Vorteilhafte Weiterbildungen der Erfindung gehen aus den Unteransprüchen hervor.

Aufgrund der Erfindung erübrigt es sich, ein aufwendigeres Richtfunktsystem für höher hierarchische STM-4 Signalstrukturen einzurichten, weil für die Übertragung von STM-4 Signalen auf bereits bestehende Richtfunksysteme der niedrigsten Hierarchiestufe STM-1 zurückgegriffen wird.

### Beschreibung eines Ausführungsbeispiels

Anhand eines in der Zeichnung dargestellten Ausführungsbeispiels wird nachfolgend die Erfindung näher erläutert. Es zeigen: Figur 1 ein Blockschaltbild für eine STM-4 Datenübertragung über vier STM-1 Richtfunksysteme, Figur 2 STM-1 und STM-4 Signalrahmenstrukturen und Figur 3 ein Schema für byte-verschachteltes Multiplexen.

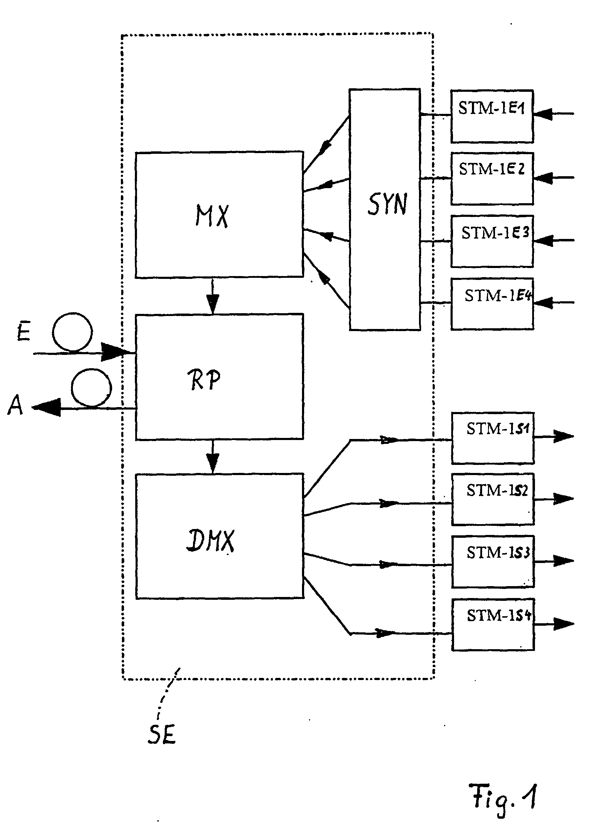

Der Figur 1 ist eine Schnittstelleneinrichtung SE zu entnehmen, die einerseits einen Eingang E und einen Ausgang A für STM-4 strukturierte Signale aufweist, die beispielsweise über optische Nachrichtenstrecken übertragen werden, und an die vier Richtfunksysteme für STM-1 strukturierte Signale angeschlossen sind. Jedes dieser vier Richtfunksysteme weist jeweils eine Empfangseinheit STM-1E1, STM-1E2, STM-1E3, STM-1E4 und eine Sendeeinrichtung STM-1S1, STM-1S2, STM-1S3, STM-1S4 auf.

Ein über den Eingang E ankommendes STM-4 Signal gelangt über einen RSOH-Prozessor RP an einen Byte Interleaved Demultiplexer DMX, der den über Richtfunk auszusendenden STM-4 Signalrahmen in vier STM-1 Signalrahmen zerlegt und den vier Sendeeinrichtungen STM-1S1 .... STM-1S4 zuteilt.

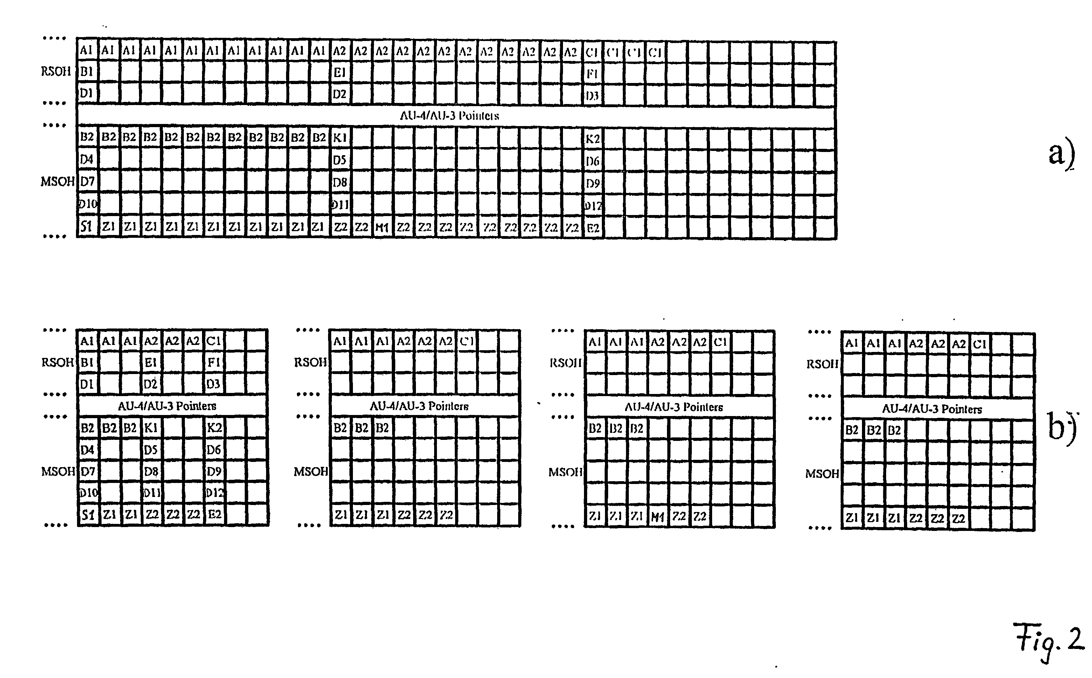

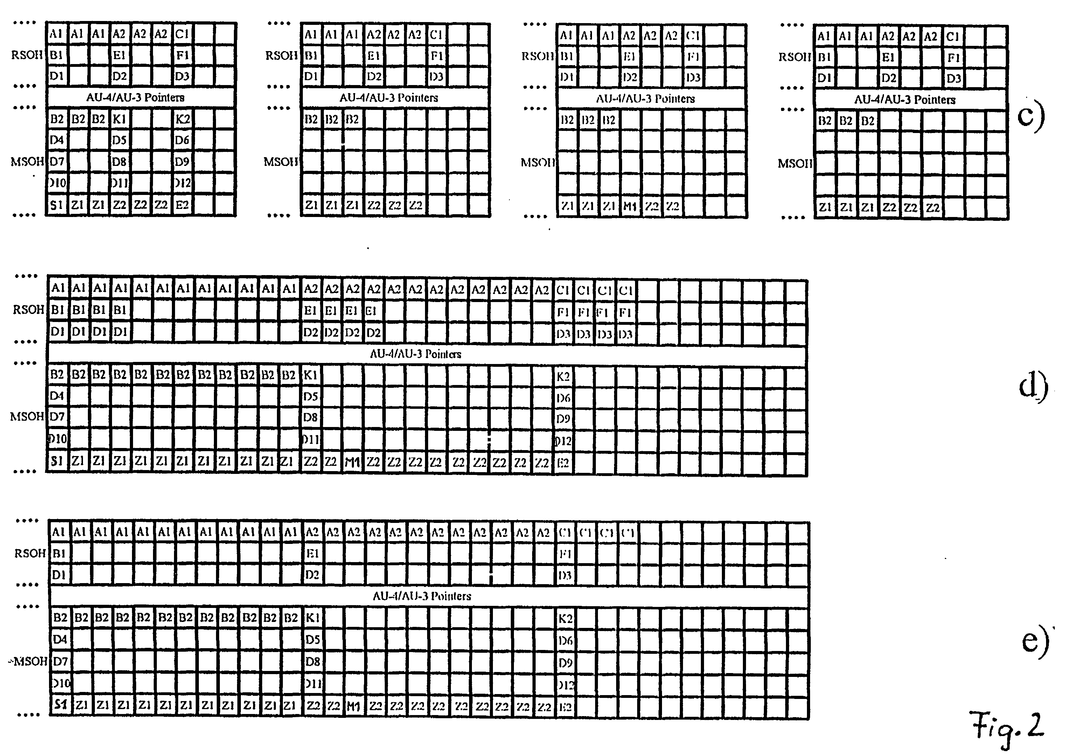

Wie bereits oben erwähnt, besitzt ein STM-4 Signalrahmen einen Section Overhead. Ein solcher in Figur 2a) dargestellter Section Overhead besteht aus einem Regenerator Section Overhead RSOH und einem Multiplex Section Overhead MSOH. Der Regenerator Section Overhead RSOH enthält 4*3 Rahmensynchronisationsbytes A1 und ebenso 4*3 Rahmensynchronisationsbytes A2. Außerdem sind darin die Bytes E1 und F1 zur Sprach- und Datenübertragung, die Bytes D1, D2 und D3 als Datenkommunikationkanal für Netzmanagementaufgaben, das Byte C1 zur Identifikation der einzelnen STM-1 Rahmen im STM-N Signal, sowie ein Byte B1 zur Information über die aufgetretenen Paritätsverletzungen durch Bitfehler in einem Regeneratorabschnitt, enthalten. Der Multiplex Section Overhead MSOH enthält 4*3 Bytes B2 zur Information über aufgetretene Paritätsverletzungen durch Bitfehler in einem Multiplexabschnitt des SDH-Netzes. Weiterhin sind Bytes D4 bis D12 zur Übertragung von Netzmanagementinformationen vorgesehen, die Bytes K1,K2 zur Steuerung von Ersatzschaltungen im SDH-Netz , das Byte S1 zur Information der Taktqualität des Datenstroms, das Byte M1 zur Übertragung der Paritätsverletzungen in den Bytes B2 in die Gegenrichtung, sowie die Bytes Z1, Z2 die bisher noch für künftige Anwendungen reserviert sind.

Die in dem Section Overhead ebenfalls vorhandenen AU-4/AU-3 Pointers sind in den einschlägigen ITU-T-Empfehlungen definiert und werden hier nicht näher beschrieben, da sie für die Erfindung nicht relevant sind.

Aus diesem in Figur 2a) dargestellten STM-4 Signalrahmen erzeugt der Byte Interleaved Demultiplexer DMX die vier in Figur 2b) dargestellten STM-1 Signalrahmen, welche von den Sendeeinrichtungen STM-1S1 .... STM-1S4 über vier verschiedene Funkfelder übertragen werden. Der Figur 2b) ist zu entnehmen, daß nur einer der am Ausgang des Byte Interleaved Demultiplexers DMX erscheinenden STM-1 Signalrahmen die Bytes B1, E1, F1, D1, D2 und D3 enthält. Diese Bytes werden von den nachfolgenden STM-1 Richtfunksystemen in den anderen drei STM-1 Signalrahmen ergänzt. Solche vollständigen STM-1 Signalrahmen zeigt die Figur 2c).

In entgegengesetzter Übertragungsrichtung gelangen vier STM-1 Signalrahmen, wie sie in Figur 2c) dargestellt sind, über die Empfangseinrichtungen STM-1E1, STM-1E2, STM-1E3 und STM-1E4 von vier Richtfunksystemen in die Schnittstelleneinrichtung SE. Da die einzelnen STM-1 Signalrahmen über die verschiedenen Funkfelder unterschiedliche Laufzeiten aufweisen, werden die empfangenen STM-1 Signalrahmen in einer Synchronisationseinheit SYN bytesynchronisiert. Darin werden auf die Synchronbytes A1 und A2 im Regenerator Section Overhead RSOH eines empfangenen STM-1 Signalrahmens die restlichen drei STM-1 Signalrahmen aufsynchronisiert. Für den Ausgleich des Byteversatzes zwischen den einzelnen STM-1 Signalrahmen können z.B. elastische Speicher eingestzt werden. Die synchronisierten STM-1 Signalrahmen gemäß Figur 2c) werden dann einem Byte Interleaved Multiplexer MX zugeführt, der alle STM-1 Signalrahmen zu einem Signalrahmen gemäß Figur 2d) zusammenfügt.

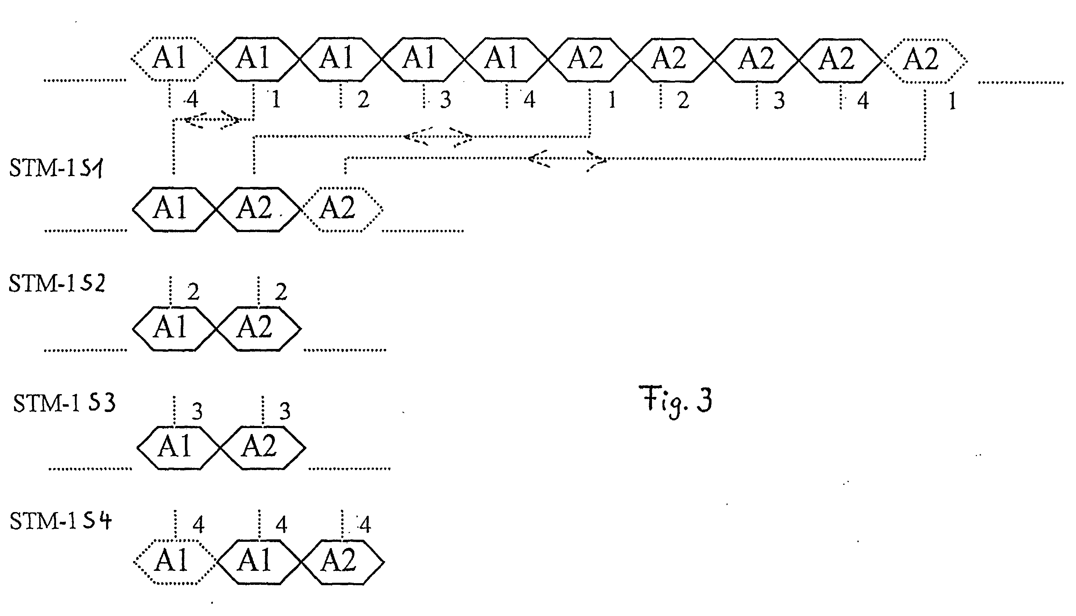

Wie ein byte-verschachteltes (byte interleaved) Demultiplexen bzw. Multiplexen von statten geht, verdeutlicht die Figur 3. Dort sind in der Zeile 1 die Rahmensynchronisationsbytes A1 und A2 eines STM-4 Signalrahmens aneinandergereiht, und die verschachtelte Zuordnung dieser Rahmensynchronisationsbytes A1 und A2 auf die STM-1 Signalrahmen entnimmt man den weiteren Zeilen der Figur 3.

Der durch das Byte Interleaved Multiplexen entstandene Signalrahmen (Figur 2d)) entspricht nicht einem definierten STM-4 Signalrahmen, weil im Regenerator Section Overhead RSOH mehrere Bytes B1, E1, F1, D1, D2 und D3 vierfach besetzt sind. In dem nachfolgenden RSOH-Prozessor RP werden die mehrfach gesetzten Bytes überschrieben und das Byte B1 über das neu entstandene STM-4 Signal gebildet, so daß letztendlich am Ausgang A des RSOH-Prozessors RP ein STM-4 Signalrahmen mit dem Regenerator Section Overhead RSOH gemäß Figur 2e) zur Verfügung steht.

Zu den vier STM-1 Richtfunksystemen, deren Übertragungskanäle in verschiedenen Frequenzbereichen liegen und auch verschiedene Modulationsarten verwenden können, braucht nur ein einziges zusätzliches STM-1 Richtfunksystem vorgesehen zu werden, das als Ersatzschaltung dient. Ein ausgefallenes oder gestörtes Richtfunksystem braucht dann nur auf dieses Ersatz-Richtfunksystem umgeschaltet zu werden.

Wie bereits einleitend gesagt, gehört das beschriebene STM-4 Richtfunksystem zu einem Regeneratorabschnitt des SDH-Netzes. Deshalb dürfen von den einzelnen STM-1 Richtfunktsystemen und der Schnittstelleneinrichtung SE nur die Bytes im Regenerator Section Overhead RSOH verändert werden, die Bytes in der Multiplex Section Overhead MSOH müssen dagegen unverändert übertragen werden; das gilt auch für die Pointerinformationen AU-4/Au-3.

## Patentansprüche

1. Richtfunksystem zum Übertragen von STM-4 strukturierten Signalen innerhalb eines Regenerator-Abschnittes eines Übertragungsnetzes der synchronen digitalen Hierarchie (SDH), wobei ein STM-4 Signal einen Rahmen darstellt, der neben einem Nutzsignalbereich einen Bereich für Steuerinformationen - Section Overhead - enthält, welcher einen Regenerator Section Overhead, AU-4/AU-3 Pointers und einen Multiplexer Section Overhead aufweist, bei dem zur Übertragung der STM-4 strukturierten Signale vier für STM-1 strukturierte Signale ausgelegte Richtfunksysteme (STM-1 E1, ..., STM-1 E4, STM-1 S1, ..., STM-1 S4) vorgesehen sind, bei dem ein Byte Interleaved Demultiplexer (DMX) vorgesehen ist, um einen auszusendenen STM-4 Signalrahmen in vier STM-1 Signalrahmen zu zerlegen und den vier STM-1 Richtfunksystemen (STM-1 S1, ..., STM-1 S4) zuzuteilen,
bei dem ein Byte Interleaved Multiplexer (MX) vorgesehen ist, um vier empfangene STM-1 Signalrahmen nach einer die unterschiedlichen Laufzeiten dieser vier STM-1 Signalrahmen ausgleichenden Synchronisation (SYN) zu einem Signalrahmen zusammenzufügen, bei dem ein RSOH-Prozessor (RP) vorhanden ist, welcher in dem vom Multiplexer (MX) erzeugten Signalrahmen den Regenerator Section Overhead (RSOH) an die STM-4 Rahmenstruktur anpaßt, und bei dem der Multiplex Section Overhead (MSOH) und die AU-4/AU-3 Pointer des STM-4 Signalrahmens unverändert übertragbar sind.

2. Richtfunksystem nach Anspruch 1, **dadurch gekennzeichnet, daß** die STM-1 Richtfunksysteme (STM-1 E1, ..., STM-1 E4, STM-1 S1, ..., STM-1 S4) die STM-1 Rahmen in unterschiedlichen Frequenzkanälen übertragen.

3. Richtfunksystem nach Anspruch 1 oder 2, **dadurch gekennzeichnet, daß** zusätzlich zu den vier STM-1 Richtfunksystemen (STM-1 E1, ..., STM-1 E4, STM-1 S1, ..., STM-1 S4) ein einziges STM-1 Richtfunksystem vorhanden ist, das als Ersatzschaltung dient

## Claims

1. A radio relay system for the transmission of STM-4 structured signals within a regenerator section of a transmission network of the synchronous digital hierarchy (SDH) , with an STM-4 signal representing a frame which contains, in addition to a desired signal region, a region for control information - section overhead - which has a regenerator section overhead, AU-4/AU-3 pointers and a multiplexer section overhead,
wherein, for the transmission of the STM-4 structured signals, four radio relay systems (STM-1 E1, ..., STM-1 E4, STM-1 Si, ..., STM-1 S4) designed for STM-1 structured signals are provided;
wherein a byte interleaved depmultiplexer (DMX) is provided in order to break an STM-4 signal frame to be transmitted into four STM-1 signal frames and to assign them to the four STM-1 radio relay systems (STM-1 S1, ..., STM-1 S4);
wherein a byte interleaved multiplexer (MX) is provided in order to put together four received STM-1 signal frames to one signal frame in accordance with a synchronisation (SYN) compensating the different transit times of these four STM-1 signal frames;
wherein an RSOH processor (RP) is present which matches the regenerator section overhead (RSOH) to the STM-4 frame structure in the signal frame generated by the multiplexer (MX); and
wherein the multiplex section overhead (MSOH) and the AU-4/AU-3 pointers of the STM-4 signal frame can be transmitted unchanged.

2. A radio relay system in accordance with claim 1, **characterised in that** the STM-1 radio relay systems (STM-1 E1, ..., STM-1 E4, STM-1 S1, ..., STM-1 S4) transmit the STM-1 frames in different frequency channels.

3. A radio relay system in accordance with claim 1 or claim 2, **characterised in that**, in addition to the four STM-1 radio relay systems (STM-1 E1, ..., STM-1 E4, STM-1 S1, ..., STM-1 S4), one single STM-1 radio relay system is present which serves as a substitute circuit.

## Revendications

1. Système de faisceau hertzien pour la transmission de signaux structurés STM-4 à l'intérieur d'une section de régénération d'un réseau de transmission de la hiérarchie numérique synchrone (SDH), un signal STM-4 présentant un cadre qui contient, en plus d'une plage de signal utile, une plage pour des informations de commande (Section Overhead), qui présente un régénérateur Section Overhead, AU-4/AU-3 Pointers et un multiplexeur Section Overhead,
avec lequel il est prévu pour la transmission des signaux structurés STM-4 quatre systèmes de faisceaux hertziens conçus pour des signaux structurés STM-1 (STM-1 E1,... , STM-1 E4, STM-1 S1,... , STM-1 S4),
avec lequel il est prévu un Byte Interleaved Demultiplexer (DMX), pour décomposer un cadre de signal STM-4 à envoyer en quatre cadres de signal STM-1 et les attribuer aux quatre systèmes de faisceaux hertziens STM-1 (STM-1 S1, ..., STM-1 S4),
avec lequel il est prévu un Byte Interleaved Multiplexer (MX) pour assembler quatre cadres de signal STM-1 réceptionnés selon une synchronisation (SYN) qui équilibre les différents temps de propagation de ces quatre cadres de signal STM-1 en un cadre de signal, avec lequel on a un processeur RSOH (RP), qui adapte dans le cadre de signal généré par le multiplexeur (MX) le régénérateur Section Overhead (RSOH) à la structure de cadre STM-4, et avec lequel le Multiplex Section Overhead (MSOH) et les pointeurs AU-4/AU-3 du cadre de signal STM-4 peuvent être transmis sans modification.

2. Système de faisceau hertzien selon la revendication 1, **caractérisé en ce que** les systèmes de faisceaux hertziens STM-1 (STM-1 E1, ..., STM-1 E4, STM-1 S1, ..., STM-1 S4) transmettent les cadres STM-1 dans des canaux de fréquences différents.

3. Système de faisceau hertzien selon la revendication 1 ou 2, **caractérisé en ce que**, en supplément des quatre systèmes de faisceaux hertziens STM-1 (STM-1 E1, ..., STM-1 E4, STM-1 S1, ..., STM-1 S4), on a un unique système de faisceau hertzien STM-1 qui sert de circuit de remplacement.
